# EUROPÄISCHE PATENTANMELDUNG

(11) **EP 3 636 921 A1**
(43) Veröffentlichungstag der Anmeldung: **15.04.2020**
(21) Anmeldenummer: 18199261.1
(22) Anmeldetag: 09.10.2018
(51) Int. Cl.: F04B 39/10, F16K 15/08, F16K 15/10, B22F 3/105

(54) **SITZVENTIL, VENTILKOMPONETEN EINES SITZVENTILS, SOWIE VERFAHREN ZUM HERSTELLEN VON VENTILKOMPONENTEN EINES SITZVENTILS**

(71) Anmelder: Burckhardt Compression AG, 8404 Winterthur (CH)
(72) Erfinder: PFISTER, Matthias, 8406 Winterthur (CH); SCHULZ, Reiner, 79807 Lottstetten (DE)
(74) Vertreter: Dr. Graf & Partner AG

(57) **Zusammenfassung**

Sitzventil (10), insbesondere Plattenventil, mit einer Längsachse (L), mit einem Ventilsitz (12) aufweisend eine Mehrzahl von Ventilsitzdurchlasskanälen (18), mit einem in Richtung der Längsachse (L) beabstandet zum Ventilsitz (12) angeordneten Fänger (14) und mit einem zwischen dem Ventilsitz (12) und dem Fänger (14) beweglich angeordneten Dichtelement (16) zum Öffnen und Schliessen der Ventilsitzdurchlasskanäle (18), wobei mindestens eine der als Ventilsitz (12), Fänger (14) oder Dichtelement (16) ausgebildeten Ventilkomponenten zumindest abschnittsweise durch additive Fertigung erzeugt ist, insbesondere durch selektives Laserschmelzen oder selektives Lasersintern (SLS) oder Elektronenstrahlschmelzen.

## Beschreibung

Die vorliegende Erfindung betrifft ein Sitzventil, insbesondere ein Plattenventil, eine Ventilkomponente für ein solches Sitzventil, sowie ein Verfahren zum Herstellen von Ventilkomponenten für ein solches Sitzventil.

### Stand der Technik

Aus dem Stand der Technik, wie beispielsweise in WO 2004/065790 A1 gezeigt, sind sogenannte Plattenventile bekannt, die in Kolbenkompressoren zum Einsatz kommen können. Derartige Plattenventile weisen üblicherweise einen Ventilsitz, einen Ventilfänger sowie zumindest ein zwischen dem Ventilsitz und dem Ventilfänger angeordnetes Dichtelement auf. Das Dichtelement ist zum Öffnen und Schliessen von Durchlasskanälen in dem Ventilsitz beweglich angeordnet.

Beim Schliessen der Durchlasskanäle der Ventilplatte gelangt das Schliesselement am Ventilsitz zur Anlage, sodass die auf das Dichtelement wirkenden Schliesskräfte durch den Ventilsitz aufgenommen beziehungsweise abgeleitet werden. Im Hinblick auf die damit einhergehenden mechanischen Belastungen ist der Ventilsitz besonders stabil auszulegen. Hierzu werden die in Rede stehenden Ventilsitze üblicherweise aus dem Vollen gefräst. Die Durchlasskanäle werden also durch Fräsen in einem plattenförmigen Rohling ausgebildet. Einerseits ist dies mit hohen Herstellkosten verbunden. Zudem weisen die mittels Fräsen erzeugten Durchlasskanäle, welche beispielsweise nutartig geformt sein können, in längsaxialer Richtung des Ventilsitzes - also entlang der Ventilsitzhöhe - eine relativ grosse Erstreckung auf, wodurch ein verhältnismässig hoher Druckverlust beim durchfliessenden Fluid entsteht.

### Darstellung der Erfindung

Vor diesem Hintergrund hat der vorliegenden Erfindung die Aufgabe zugrunde gelegen, ein Sitzventil anzugeben, das mit nur geringem Aufwand herstellbar ist und gleichzeitig verbesserte Betriebseigenschaften aufweist. Ebenso bestand die Aufgabe darin, eine Ventilkomponente für ein derartiges Sitzventil anzugeben.

In Bezug auf das Sitzventil ist diese Aufgabe durch den Gegenstand des Anspruchs 1 gelöst worden. Eine erfindungsgemässe Ventilkomponente ist in Anspruch 15 angegeben. Ein erfindungsgemässes Verfahren zur Herstellung von Ventilkomponenten ist in Anspruch 16 angegeben. Vorteilhafte Ausgestaltungen sind in den abhängigen Ansprüchen angegeben und werden nachfolgend erörtert.

Bei einem erfindungsgemässen Sitzventil handelt es sich insbesondere um ein Plattenventil beziehungsweise um ein Ringplattenventil. Ein solches Sitzventil beziehungsweise Plattenventil ist insbesondere für den Einsatz in einem Kolbenkompressor ausgebildet.

Ein erfindungsgemässes Sitzventil weist einen Ventilsitz, einen beabstandet zum Ventilsitz angeordneten Fänger und mindestens ein zwischen dem Ventilsitz und dem Fänger beweglich angeordnetes Dichtelement zum Öffnen und Schliessen zumindest eines im Ventilsitz ausgebildeten Durchlasskanals auf. Mindestens eine der als Ventilsitz, Fänger oder Dichtelement ausgebildeten Ventilkomponenten ist zumindest abschnittsweise durch additive Fertigung erzeugt. Bei dem Ventilsitz, dem Fänger sowie auch dem Dichtelement handelt es sich folglich um Ventilkomponenten und erfindungsgemäss ist zumindest eine dieser Ventilkomponenten zumindest abschnittsweise durch additive Fertigung erzeugt.

Durch den Einsatz additiver Fertigung - auch unter der Bezeichnung generative Fertigung bekannt - lassen sich mit nur geringem Aufwand komplexe geometrische Strukturen erzeugen. So kann beispielsweise mit nur geringem Materialeinsatz eine Komponente mit ausreichend hoher mechanischer Stabilität hergestellt werden. Hierdurch kann eine insgesamt hohe Betriebssicherheit gewährleistet werden. Beispielsweise kann durch Auswahl einer geeigneten Komponentengeometrie bei nur geringer Bauhöhe die jeweils geforderte mechanische Stabilität erzielt werden. Insbesondere lässt sich also durch den Einsatz additiver Fertigung die Gesamtbauhöhe des Ventilsitzes - also in längsaxialer Erstreckung - reduzieren, ohne dass sich hierdurch Stabilitätseinbussen ergeben.

Durch eine reduzierte Gesamtbauhöhe des Ventilsitzes ergibt sich beim Einsatz in Kolbenkompressoren ein reduzierter Totraum. Die Betriebseffizienz des jeweiligen Kolbenkompressors kann auf diese Weise verbessert werden.

Schliesslich kann durch den Einsatz additiver Fertigung mit nur geringem Aufwand eine Verkürzung der Durchlasskanäle in längsaxialer Richtung des Ventilsitzes begünstigt werden. Zum einen ergibt sich eine Verkürzung der Länge der Durchlasskanäle in längsaxialer Richtung aus einer reduzierten Gesamtbauhöhe der jeweiligen Ventilkomponente - wie voranstehend erwähnt. Zum anderen können durch den Einsatz additiver Fertigungsverfahren einzelne Durchlasskanäle ausgebildet werden, deren längsaxiale Erstreckung gegebenenfalls kürzer ist als die Gesamtbauhöhe der jeweiligen Ventilkomponente. Insgesamt lässt sich hierdurch der Strömungswiderstand reduzieren und es ergeben sich verbesserte Betriebseigenschaften für das Sitzventil. Durch den Einsatz additiver Fertigung lässt sich schliesslich ohne Mehraufwand die Anzahl an Durchlasskanälen erhöhen, wodurch sich der Strömungswiderstand weiter verringern lässt.

Gemäss einer bevorzugten Ausgestaltung kann zwischen dem Dichtelement und dem Fänger auch ein Dämpfelement angeordnet sein. Durch ein solches Dämpfelement können Bewegungen des Dichtelements in Richtung des Fängers gedämpft beziehungsweise abgefangen und materialschonend entschleunigt werden. Auch ein derartiges Dämpfelement kann durch additive Fertigung erzeugt sein.

In bevorzugter Weise ist zumindest eine der als Ventilsitz, Fänger, Dichtelement oder Dämpfelement ausgebildeten Ventilkomponenten vollständig durch additive Fertigung erzeugt. Darüber hinaus kann die jeweilige Komponente einer Nachbearbeitung unterzogen sein. Ebenso ist es möglich, dass nur ein Abschnitt der jeweiligen Ventilkomponente durch additive Fertigung und ein anderer Abschnitt durch ein alternatives Fertigungsverfahren erzeugt ist. Die beiden unterschiedlich erzeugten Komponentenabschnitte können beispielsweise zusammengefügt sein. Hierdurch ergibt sich eine grosse Gestaltungs- und Fertigungsflexibilität. So können lediglich komplexe geometrische Strukturen durch additive Fertigung und einfache Strukturen durch alternative Fertigungsverfahren, wie zum Beispiel sonstige urformende, umformende oder spanabhebende Fertigungsverfahren, erzeugt werden.

In weiter vorteilhafter Ausgestaltung ist mindestens eine der als Ventilsitz, Fänger, Dichtelement oder Dämpfelement ausgebildeten Ventilkomponenten mechanisch bearbeitet. Für eine solche mechanische Bearbeitung kommt beispielsweise die spanabhebende und/oder zerteilende Fertigung infrage. Beispielsweise kann die jeweilige Ventilkomponente zumindest abschnittsweise oder vollständig durch additive Fertigung erzeugt und anschliessend einer spanabhebenden Nachbearbeitung unterzogen werden, wodurch sich die Vorteile der additiven Fertigung sowie der spanabhebenden Bearbeitung in vorteilhafter Weise kombinieren lassen.

Weiter bevorzugt können der Ventilsitz und der Fänger durch dasselbe Fertigungsverfahren beziehungsweise abschnittsweise durch dasselbe Fertigungsverfahren erzeugt sein. Hierdurch lassen sich die Herstellungskosten weiter verringern. Demgegenüber kann das Dichtelement und/oder das Dämpfelement durch ein Fertigungsverfahren erzeugt sein, welches sich von dem Fertigungsverfahren für den Ventilsitz und/oder für den Fänger un terscheidet.

Das Dichtelement kann aus einem Metallwerkstoff oder einem Kunstwerkstoffmaterial hergestellt sein. Dabei kommt für die Herstellung des Dichtelements sowohl ein additives Fertigungsverfahren oder aber auch ein zerteilendes Fertigungsverfahren in Frage, wie zum Beispiel das Stanzen. Sofern das Dichtelement als Stanzteil ausgeführt ist, kann die Herstellung mit nur geringem Kostenaufwand bewerkstelligt werden. Grundsätzlich kann das Stanzen für das Dichtelement eingesetzt werden, da das Dichtelement eine nur geringe Dicke beziehungsweise Höhe aufweist. Demgegenüber können bei Einsatz einer additiven Fertigung für die Herstellung des Dichtelements ebenfalls komplexe geometrische Strukturen vorgesehen werden. Dies gilt unabhängig davon, ob das Dichtelement aus einem Kunststoffmaterial oder aus Metallwerkstoff hergestellt wird. Beispielsweise kann das Dichtelement durch den Einsatz additiver Fertigung mit Formelementen in Dicken- beziehungsweise Höhenrichtung versehen sein, die in einer Schliessstellung in Durchlasskanäle des Ventilsitzes eingreifen und damit eine verbesserte Abdichtung gewährleisten.

Gemäss einer vorteilhaften Ausgestaltung ist mindestens eine der als Ventilsitz, Fänger, Dichtelement oder Dämpfelement ausgebildeten Ventilkomponenten zumindest abschnittsweise durch Fertigung aus einem pulverförmigen, körnigen, plastischen und/oder flüssigen Zustand erzeugt, wodurch ein hohes Mass an Fertigungsflexibilität gewährleistet werden kann.

In weiter vorteilhafter Ausgestaltung können die jeweiligen Ventilkomponenten insbesondere aus metallischen Werkstoffen und/oder aus Kunststoff hergestellt sein. Insbesondere können Ventilsitz und Fänger aus einem Metallwerkstoff oder aber auch aus Kunststoff hergestellt sein. Das Dichteelement kann ebenso aus einem Metallwerkstoff oder aus einem Kunststoffmaterial bestehen. Schliesslich kann auch ein gegebenenfalls vorgesehenes Dämpfelement aus einem Metallwerkstoff oder aus einem Kunststoffmaterial bestehen.

Es besteht ferner die Möglichkeit, die jeweilige Ventilkomponente durch einen faserverstärkten Werkstoff zu erzeugen. Die Verstärkungsfasern können dabei durch additive Fertigung in die jeweilige Komponente eingebracht werden. Insbesondere bei Kunststoffmaterialien kann hierdurch eine nennenswerte Erhöhung der Festigkeit erzielt werden.

Gemäss einer weiter bevorzugten Ausgestaltung ist mindestens eine der als Ventilsitz, Fänger, Dichtelement oder Dämpfelement ausgebildeten Ventilkomponenten zumindest abschnittsweise durch selektives Laserschmelzen, selektives Lasersintern (SLS) oder Elektronenstrahlschmelzen erzeugt. Hierdurch lassen sich Bauteile mit grossen spezifischen Dichten erzeugen, wodurch eine insgesamt hohe Stabilität gewährleistet werden kann.

Ebenso ist es möglich, die jeweilige Ventilkomponente durch selektives Heizsintern (englisch: selective heat sintering (SHS)), Binder Jetting, Schmelzschichtung (englisch: Fused Deposition Modeling (FDM)), Stereolithographie und/oder 3D-Siebdruck zu erzeugen.

Gemäss einer vorteilhaften Ausgestaltung kann mindestens eine der als Ventilsitz, Fänger, Dichtelement oder Dämpfelement ausgebildeten Ventilkomponenten durch eine Kombination der vorstehend genannten Fertigungsverfahren erzeugt sein, wodurch die Fertigungsflexibilität weiter erhöht wird.

Es kann weiter von Vorteil sein, wenn mindestens eine der als Ventilsitz oder Fänger ausgebildeten Ventilkomponenten eine Mehrzahl von in Umlaufrichtung verlaufenden Durchlasskanalbegrenzungsabschnitten sowie eine Mehrzahl von Stegabschnitten aufweist, die gegenseitig jeweils unter einem Winkel von grösser 0°, beispielsweise unter 90° oder beispielsweise quer unter 45°, verlaufen, wobei einer der Durchlasskanalbegrenzungsabschnitte in längsaxialer Richtung der jeweiligen Ventilkomponente anders dimensioniert und/oder positioniert ist als einer der Stegabschnitte.

Die Dimensionierung beziehungsweise Positionierung der Stegabschnitte kann hierdurch unabhängig von der Dimensionierung beziehungsweise Positionierung der Durchlasskanalbegrenzungsabschnitte gewählt werden. Die Stegabschnitte einerseits sowie die Durchlasskanalbegrenzungsabschnitte andererseits lassen sich somit in längsaxialer Richtung spezifisch hinsichtlich ihrer jeweiligen Funktionalität dimensionieren beziehungsweise positionieren.

In vorteilhafter Weise können die Stegabschnitte dabei unter einem Winkel, beispielsweise unter 90° oder 45°, zum Aussenumfang der jeweiligen Ventilkomponente verlaufen. Die Stegabschnitte können die Durchlasskanalbegrenzungsabschnitte in Draufsicht auf die jeweilige Ventilkomponente - also in Höhenrichtung beziehungsweise in längsaxialer Richtung der Ventilkomponente gesehen - vorzugsweise kreuzen.

In besonders vorteilhafter Weise können die Stegabschnitte in einer radialen Richtung angeordnet sein beziehungsweise verlaufen. Dabei können die Stegabschnitte zwischen einem Mittelabschnitt der jeweiligen Ventilkomponente bis zu einem den Aussenumfang bildenden Randabschnitt verlaufen, vorzugsweise geradlinig verlaufen. Auf diese Weise können die Stegabschnitte und die Durchlasskanalbegrenzungsabschnitte eine vorteilhafte Ergänzung zueinander bilden. Ein durchgehend geradlinig verlaufender Stegabschnitt ist in der Lage besonders grosse, anliegende Kräfte zu halten. Dazu kann der geradlinig verlaufende Stegabschnitt auch einen relativ geringen Durchmesser aufweisen, was den Strömungswiderstand reduziert.

Die Stegabschnitte können einstückig mit den Durchlasskanalbegrenzungsabschnitten ausgebildet sein, besonders bevorzugt ineinander übergehen. Die Stegabschnitte können dabei die Durchlasskanalbegrenzungsabschnitte tragen beziehungsweise eine Tragstruktur für die Durchlasskanalbegrenzungsabschnitte bilden. Hierdurch besteht die Möglichkeit, die Stegabschnitte vornehmlich im Hinblick auf eine ausreichende mechanische Festigkeit und die Durchlasskanalbegrenzungsabschnitte vornehmlich im Hinblick auf eine weitere Unterteilung des Strömungsquerschnitts der jeweiligen Ventilkomponente auszugestalten.

In weiter bevorzugter Ausgestaltung kann zumindest eine der als Ventilsitz, Fänger, Dichtelement oder Dämpfelement ausgebildeten Ventilkomponenten plattenförmig ausgebildet sein. Jeweils plattenförmig ausgebildete Ventilkomponenten lassen sich in vorteilhafter Weise übereinander anordnen und gewährleisten somit einen insgesamt kompakten Aufbau, insbesondere zur Ausbildung eines sogenannten Plattenventils.

Weiter bevorzugt kann zumindest eine der als Ventilsitz, Fänger, Dichtelement oder Dämpfelement ausgebildeten Ventilkomponenten, welche vorzugsweise plattenförmig ausgebildet ist, einen kreisrunden, ovalen oder elliptischen Aussenumfang aufweisen. Ebenso kann der Aussenumfang der jeweiligen Ventilkomponente mehreckig ausgestaltet sein, beispielsweise rechteckig und/oder quadratisch. Es besteht also grundsätzlich die Möglichkeit, dass die Längendimension quer zur längsaxialen Richtung und damit quer zur Komponentenhöhe und die Breitendimension quer zur längsaxialen Richtung und damit quer zur Komponentenhöhe einander entsprechen oder auch voneinander abweichen.

Beispielsweise weist eine Ventilkomponente mit elliptischer Aussenumfangsform in Draufsicht eine grössere Länge als Breite auf und bei einer kreisrunden Aussenumfangsform sind Länge und Breite der Ventilkomponente in Draufsicht identisch zueinander. Durch Aussenumfangsformen mit grösserer Länge als Breite quer zur längsaxialen Richtung lassen sich grössere Strömungsquerschnitte realisieren, wodurch insbesondere im oberen Totpunkt eines Kolbenkompressors ein geringerer Strömungswiderstand realisiert werden kann.

Vorzugsweise sind sämtliche Ventilkomponenten des Sitzventils, insbesondere der Ventilsitz, der Fänger, das Dichtelement und gegebenenfalls auch ein vorgesehenes Dämpfelement geometrisch aufeinander abgestimmt beziehungsweise weisen eine einander entsprechend ausgestaltete Aussenumfangsform auf. Die Aussenumfangsform kann bei der jeweiligen Ventilkomponente durch einen Randabschnitt gebildet werden. Bei dem Randabschnitt kann es sich um einen Umlaufabschnitt handeln, dessen Form innenliegenden Durchlasskanalbegrenzungsabschnitten entspricht oder der eine andere Form als innenliegende Durchlasskanalbegrenzungsabschnitte aufweist.

In weiter bevorzugter Ausgestaltung können die Durchlasskanalbegrenzungsabschnitte kreisrund, oval oder elliptisch verlaufen. Ebenso besteht die Möglichkeit, dass die Durchlasskanalbegrenzungsabschnitte in Umlaufrichtung eine mehreckige, insbesondere rechteckige oder quadratische Form bilden. Der Verlauf der Durchlasskanalbegrenzungsabschnitte ist in vorteilhafter Weise an den Formverlauf des Aussenumfangs beziehungsweise des Randabschnitts der jeweiligen Ventilkomponente angepasst beziehungsweise entsprechend ausgestaltet.

In besonders vorteilhafter Weise verlaufen die Durchlasskanalbegrenzungsabschnitte einer Ventilkomponente konzentrisch zueinander und/oder weisen in Umlaufrichtung einen gleichbleibenden Abstand zueinander auf.

In weiter vorteilhafter Weise können an den Durchlasskanalbegrenzungsabschnitten Auflageflächen für die Auflage des Dichtelements oder eines gegebenenfalls vorgesehenen Dämpfelements ausgebildet sein. Die Auflageflächen können somit für das Zusammenwirken mit einem Dichtelement beziehungsweise einem Dämpfelement ausgebildet sein. Durch Anlage eines Dichtelements an einer Auflagefläche kann somit ein abdichtendes Schliessen eines Durchlasskanals bewerkstelligt werden. Es besteht ferner die Möglichkeit, dass die Stegabschnitte frei von Auflageflächen sind. Die Stegabschnitte müssen also nicht für den unmittelbaren Kontakt mit einem Dichtelement oder Dämpfelement ausgebildet sein. Die Stegabschnitte können damit vornehmlich eine hohe Zähigkeit aufweisen, wohingegen eine besonders grosse Härte nicht erforderlich ist.

Dabei kann es von Vorteil sein, wenn einer der Stegabschnitte auf einer dem Dichtelement oder dem Dämpfelement zugewandten Seite in längsaxialer Richtung der jeweiligen Ventilkomponente gegenüber einem der Durchlasskanalbegrenzungsabschnitte zurücksteht. Das jeweilige Dichtelement beziehungsweise das jeweilige Dämpfelement kontaktiert somit Auflageflächen der Durchlasskanalbegrenzungsabschnitte und gelangt nicht in Kontakt mit den Stegabschnitten.

Weiter bevorzugt kann zumindest einer der Stegabschnitte auf einer dem Dichtelement oder dem Dämpfelement abgewandten Seite in längsaxialer Richtung der jeweiligen Ventilkomponente gegenüber einem der Durchlasskanalbegrenzungsabschnitte vorstehen. Auf diese Weise kann der jeweilige Stegabschnitt besonders vorteilhaft eine Stütz- beziehungsweise Tragfunktionalität für den jeweiligen Durchlasskanalbegrenzungsabschnitt bereitstellen.

Weiter bevorzugt kann zumindest einer der Stegabschnitte in längsaxialer Richtung der jeweiligen Ventilkomponente eine grössere Dimensionierung aufweisen als einer der Durchlasskanalbegrenzungsabschnitte. Beispielsweise können die Stegabschnitte des Ventilsitzes in längsaxialer Richtung des Ventilsitzes eine grössere Dimensionierung aufweisen als die Durchlasskanalbegrenzungsabschnitte des Ventilsitzes. Durch die grössere Dimensionierung der Stegabschnitte in längsaxialer Richtung kann somit eine mechanisch stabile Konstruktion erzielt werden, wohingegen die Durchlasskanalbegrenzungsabschnitte eine geringere Dimensionierung in längsaxialer Richtung aufweisen und somit einen nur verhältnismässig geringen Strömungsverlust für das durchströmende Fluid erzeugen.

Gemäss einer weiteren Ausgestaltung können die unterschiedlichen Durchlasskanalbegrenzungsabschnitte in längsaxialer Richtung unterschiedlich dimensioniert sein. Beispielsweise können innliegende Durchlasskanalbegrenzungsabschnitte in längsaxialer Richtung eine geringere Erstreckung aufweisen als aussenliegende Durchlasskanalbegrenzungsabschnitte. Insbesondere kann sich die Erstreckung der Durchlasskanalbegrenzungsabschnitte in längsaxialer Richtung von einem innenliegend angeordneten Durchlasskanalbegrenzungsabschnitt bis zu einem weiter aussen liegenden Durchlasskanalbegrenzungsabschnitt schrittweise erhöhen. Der am weitesten innenliegend angeordnete Durchlasskanalbegrenzungsabschnitt kann somit die geringste Erstreckung in längsaxialer Richtung aufweisen und der am weitesten aussenliegend angeordnete Durchlasskanalbegrenzungsabschnitt kann somit die grösste Erstreckung in längsaxialer Richtung aufweisen. Bei dem am weitesten aussenliegend angeordneten Durchlasskanalbegrenzungsabschnitt kann es sich insbesondere um einen Randabschnitt handeln.

Weiter bevorzugt kann der wenigstens eine Durchlasskanal des Ventilsitzes zwischen zwei benachbarten Durchlasskanalbegrenzungsabschnitten ausgebildet sein. Dabei kann der Durchlasskanal in längsaxialer Richtung des Ventilsitzes eine strömungsmechanisch angepasste Form aufweisen. Die Form des Durchlasskanals kann somit im Hinblick auf strömungsmechanisch günstige Eigenschaften gewählt sein, insbesondere im Hinblick auf geringe Strömungswiderstände beziehungsweise zur Begünstigung einer laminaren beziehungsweise verwirbelungsfreien Strömung.

Dementsprechend kann auch der Fänger einen Durchlasskanal aufweisen, der zwischen zwei benachbarten Durchlasskanalbegrenzungsabschnitten ausgebildet ist und in längsaxialer Richtung des Fängers eine strömungsmechanisch angepasste Form aufweist. Auch die strömungsmechanisch angepasste Form des Durchlasskanals im Fänger kann in Hinblick auf günstige strömungsmechanische Eigenschaften gewählt sein. Gemäss einer weiter vorteilhaften Ausgestaltung kann mindestens eine der als Ventilsitz oder Fänger ausgebildeten Ventilkomponenten eine Mehrzahl von konzentrisch zueinander angeordneten Durchlasskanälen aufweisen. Der zumindest eine Durchlasskanal beziehungsweise die Mehrzahl an Durchlasskanälen kann/können in vorteilhafter Weise nutartig ausgebildet sein.

In vorteilhafter Weise können in der jeweiligen Ventilkomponente, die als Ventilsitz, Fänger, Dichtelement oder Dämpfelement ausgebildet sein kann, zwischen 3 und 20, vorzugsweise zwischen 5 und 10 in radialer Richtung konzentrisch zueinander angeordnete Durchlasskanäle vorgesehen sein. Durch eine höhere Anzahl von Durchlasskanälen je Ventilkomponente lässt sich der Strömungswiderstand weiter reduzieren.

In weiter bevorzugter Weise kann zumindest ein Durchlasskanal in Umfangsrichtung durch wenigstens einen Stegabschnitt abschnittsweise unterbrochen sein. Unter abschnittsweiser Unterbrechung ist hier eine Unterbrechung zu verstehen, die sich nicht entlang der gesamten längsaxialen Erstreckung des Durchlasskanals erstreckt. Somit bleiben die in Umlaufrichtung verteilten Abschnitte eines Durchlasskanals miteinander in Fluidverbindung - auch bei Anlage des Dichtelements beziehungsweise des jeweiligen Dämpfelements an eine Auflagefläche der jeweiligen Ventilkomponente. Hierdurch kann einerseits ein hohes Mass an Stabilität erzielt werden, ohne dass die Strömungseigenschaften des jeweiligen Durchlasskanals nennenswert beeinträchtigt werden.

In weiter bevorzugter Weise können die Durchlasskanäle der jeweiligen Ventilkomponente in radialer Richtung eine Breite von 3 bis 10 mm, vorzugsweise von 4 bis 8 mm und besonders bevorzugt von 6 bis 7 mm aufweisen. Die Breite des jeweiligen Durchlasskanals kann mindestens 3 bis 4 mm und maximal 8 bis 10 mm aufweisen. Vorzugsweise weisen sämtliche Durchlasskanäle der jeweiligen Ventilkomponente derartige Breitenabmessungen auf. Besonders bevorzugt weisen sämtliche Durchlasskanäle dieselben Breitenabmessungen auf.

In weiter bevorzugter Weise kann der wenigstens eine Durchlasskanal des Fängers ein durchströmendes Fluid in Richtung einer durch den Mittelpunkt des Fängers verlaufende Längsachse leiten. Hierzu kann der wenigstens eine Durchlasskanal des Fängers im Längsschnitt relativ zur Längsachse des Fängers geneigt beziehungsweise gekrümmt sein. Unter Neigung beziehungsweise Krümmung kann der mittlere Längsschnittverlauf des Durchlasskanals gemeint sein. Durch eine derartige Ausgestaltung kann gezielt Einfluss auf das Strömungsverhalten des durchfliessenden Fluides nach Verlassen des Sitzventils genommen werden. Das Strömungsverhalten innerhalb beziehungsweise ausserhalb eines Kolbenkompressors kann auf diese Weise verbessert werden.

Weiter bevorzugt kann wenigstens ein Durchlasskanal durch Oberflächen benachbarter Durchlasskanalbegrenzungsabschnitte definiert sein, die einen sich in längsaxialer Richtung der jeweiligen Ventilkomponente zumindest abschnittsweise ändernden Formverlauf aufweisen. Durch einen derart ändernden Formverlauf von Oberflächen kann in vorteilhafter Weise Einfluss auf die strömungsmechanischen Eigenschaften genommen werden. Die Oberflächen können in längsaxialer Richtung Krümmungen aufweisen, gegenüber der längsaxialen Richtung der Ventilkomponente geneigt oder insgesamt als Freiformflächen ausgebildet sein. Derartige Formverläufe können als Ergebnis strömungsmechanischer Modellierung gewählt sein und durch den Einsatz additiver Fertigung mit nur geringem Aufwand in der jeweiligen Ventilkomponente ausgebildet werden.

In weiter bevorzugter Ausgestaltung kann zumindest einer der Durchlasskanalbegrenzungsabschnitte eine Querschnittsform aufweisen, die sich in längsaxialer Richtung der jeweiligen Ventilkomponente in einer von dem Dichtelement oder von dem Dämpfelement abgewandten Orientierung verjüngt. Eine solche Ausgestaltung kommt sowohl für den Ventilsitz als auch für den Fänger in Betracht. Bei einer solchen Ausgestaltung kann der Ventilsitz die Funktion einer Düse einnehmen und der Fänger kann die Funktion eines Diffusors erfüllen. Dies ist insbesondere dem Umstand geschuldet, dass durch eine entsprechende Verjüngung der Durchlasskanalbegrenzungsabschnitte in längsaxialer Richtung auch eine Vergrösserung beziehungsweise Verbreiterung der Durchlasskanäle in einer von dem Dichtelement beziehungsweise Dämpfelement abgewandten Orientierung einhergeht.

Gemäss einer weiteren Ausgestaltung des erfindungsgemässen Sitzventils kann zumindest einer der Stegabschnitte einen sich in längsaxialer Richtung der jeweiligen Ventilkomponente ändernden Formverlauf aufweisen. Dabei ist es ebenso möglich, dass der jeweilige Stegabschnitt eine strömungsmechanisch angepasste Form aufweist. Da die Durchlasskanäle abschnittsweise durch einen Stegabschnitt unterbrochen sein können, kann durch eine strömungsmechanisch angepasste Form der Stegabschnitte eine weitere Reduzierung des Strömungswiderstands gewährleistet werden. Ebenso kann in einem gegenüber den Durchlasskanalbegrenzungsabschnitten überstehenden Teil der Stegabschnitte eine strömungsbegünstigende Form der Stegabschnitte zur Eigenschaftsverbesserung des Sitzventils beitragen.

Gemäss einer weiteren Ausgestaltung kann zumindest einer der Stegabschnitte einen sich in seiner Längsrichtung - also beispielsweise in einer radialen Richtung der jeweiligen Ventilkomponente - ändernden Formverlauf aufweisen. Dabei kann der Stegabschnitt einen sich in seiner Längsrichtung abschnittsweise verjüngenden und/oder erweiternden Formverlauf aufweisen. So kann sich ein solcher Stegabschnitt beispielsweise ausgehend von einem Mittelabschnitt der jeweiligen Ventilkomponente zunächst verjüngen und dann vor Übergang in einen Randabschnitt der Ventilkomponente wieder erweitern. Es ergibt sich hierdurch ein materialsparender Aufbau bei gleichzeitig guten mechanischen Eigenschaften. Insbesondere können auf diese Weise unerwünschte Spannungsspitzen im Betrieb der Ventilkomponente vermieden werden.

Gemäss einer weiter bevorzugten Ausgestaltung kann eine Mehrzahl der Stegabschnitte, insbesondere mehr als zwei Stegabschnitte, ausgehend von einem Mittelabschnitt der jeweiligen Ventilkomponente bis zu einem den Aussenumfang der jeweiligen Ventilkomponente definierenden Randabschnitt verlaufen. Unter einem Mittelabschnitt ist hier ein Materialabschnitt der Ventilkomponente zu verstehen, die eine Durchgangsbohrung begrenzt, über die eine Verschraubung der Ventilkomponenten vorgenommen werden kann. Bevorzugt können dabei zwei gegenüberliegend angeordnete Stegabschnitte entlang einer durchgehenden Linie verlaufen. Die Gegenüberliegend angeordneten Stegabschnitte können durch einen Mittelabschnitt miteinander verbunden sein. Die jeweilige Ventilkomponente, insbesondere der Ventilsitz beziehungsweise Fänger, kann vorzugsweise spiegelsymmetrisch ausgestaltet sein.

Weiter bevorzugt kann mindestens eine der als Ventilsitz oder Fänger ausgebildeten Ventilkomponenten auf einer dem Schliesselement beziehungsweise Dämpfelement abgewandten Seite gerundete Endflächen beziehungsweise abgerundete Kanten aufweisen, wodurch die Gefahr von Verwirbelungen des durchströmenden Fluids weiter verringert werden kann. Derartig abgerundete Endflächen sind in besonders vorteilhafter Weise an den Durchlasskanalbegrenzungsabschnitten und/oder den Stegabschnitten ausgebildet.

Ein weiterer Aspekt der vorliegenden Erfindung betrifft ein Sitzventil, bei dem es sich vorzugsweise um ein Plattenventil handelt, mit einem Ventilsitz, einen beabstandet zum Ventilsitz angeordneten Fänger, mindestens ein zwischen dem Ventilsitz und dem Fänger beweglich angeordnetes Dichtelement zum Öffnen und Schliessen zumindest eines im Ventilsitz ausgebildeten Durchlasskanals sowie ein mindestens ein zwischen dem Dichtelement und dem Fänger angeordnetes Dämpfelement zum Dämpfen von Bewegungen des Dichtelements in Richtung des Fängers. Mindestens eine der als Ventilsitz, Fänger, Dichtelement oder Dämpfelement ausgebildeten Ventilkomponenten ist zumindest abschnittsweise durch additive Fertigung erzeugt. Bei dem Ventilsitz, dem Fänger, dem Dichtelement sowie auch dem Dämpfelement handelt es sich folglich um Ventilkomponenten und gemäss dem vorliegenden Aspekt der Erfindung ist zumindest eine dieser Ventilkomponenten zumindest abschnittsweise durch additive Fertigung erzeugt.

Ein weiterer Aspekt der vorliegenden Erfindung betrifft eine Ventilkomponente, vorzugsweise für ein voranstehend beschriebenes Sitzventil, bei dem es sich vorzugsweise um ein Plattenventil handelt. Bei der erfindungsgemässen Ventilkomponente handelt es sich in vorteilhafter Weise um einen Ventilsitz oder um einen Fänger. Ebenso kann es sich bei der Ventilkomponente und ein Dichtelement oder ein Dämpfelement handeln. Die erfindungsgemässe Ventilkomponente weist einen Durchlasskanal auf, der durch zumindest einen Wandabschnitt begrenzt ist. Erfindungsgemäss ist der Wandabschnitt durch additive Fertigung erzeugt. Es lassen sich auf diese Weise Wandabschnitte mit insgesamt komplexen geometrischen Formen erzeugen, sodass einerseits günstige Strömungseigenschaften und gleichzeitig auch ein hohes Mass an Stabilität sichergestellt werden können. Ein solcher Wandabschnitt kann beispielsweise als vorstehend beschriebener Durchlasskanalbegrenzungsabschnitt beziehungsweise als vorstehend beschriebener Stegabschnitt ausgebildet sein.

Ein weiterer Aspekt der vorliegenden Erfindung betrifft einen Kolbenkompressor mit zumindest einem voranstehend beschriebenen Sitzventil und/oder mit einer voranstehend beschriebenen Ventilkomponente.

Die obigen Ausführungen zu den möglichen Ausgestaltungen beziehungsweise unterschiedlichen Aspekten eines erfindungsgemässen Sitzventils gelten entsprechend auch für die erfindungsgemässe Ventilkomponente sowie auch für einen erfindungsgemässen Kolbenkompressor.

Die vorliegende Erfindung wird nachfolgend anhand vorteilhafter Ausführungsformen unter Bezugnahme auf die beigefügten Zeichnungen näher erläutert:

### Kurze Beschreibung der Zeichnungen

Die zur Erläuterung der Ausführungsbeispiele verwendeten Zeichnungen zeigen:
- Fig. 1: eine perspektivische Darstellung eines erfindungsgemässen Sitzventils von einer Einströmseite;
- Fig. 2: eine perspektivische Darstellung des Sitzventils von Fig. 1 von einer gegenüberliegenden Ausströmseite;
- Fig. 3: eine Schnittdarstellung des Sitzventils von Fig. 1 entlang einer Schnittebene A-A;
- Fig. 4: eine Schnittdarstellung des Sitzventils von Fig. 1 entlang einer Schnittebene B-B;
- Fig. 5: eine perspektivische Darstellung eines Ventilsitzes von einer aussenliegenden Einströmseite;
- Fig. 6: eine perspektivische Darstellung eines Ventilsitzes von einer innenliegenden Ausströmseite;
- Fig. 7: eine perspektivische Darstellung eines Fängers von einer innenliegenden Einströmseite;
- Fig. 8: eine perspektivische Schnittdarstellung des Fängers von Fig. 7 entlang einer Schnittebene C-C;
- Fig. 9: eine perspektivische Darstellung des Fängers von Fig. 7 von einer aussenliegenden Ausströmseite;
- Fig. 10: eine perspektivische Darstellung des Fängers von Fig. 7 in zusammengesetzter Stellung mit einem Schliesselement und einem Dämpfelement;
- Fig. 11: eine Draufsicht auf ein weiteres Ausführungsbeispiel eines Ventilsitze;
- Fig. 12: eine Draufsicht auf ein weiteres Ausführungsbeispiel eines Ventilsitze.

Grundsätzlich sind in den Zeichnungen gleiche Teile mit gleichen Bezugszeichen versehen.

### Wege zur Ausführung der Erfindung

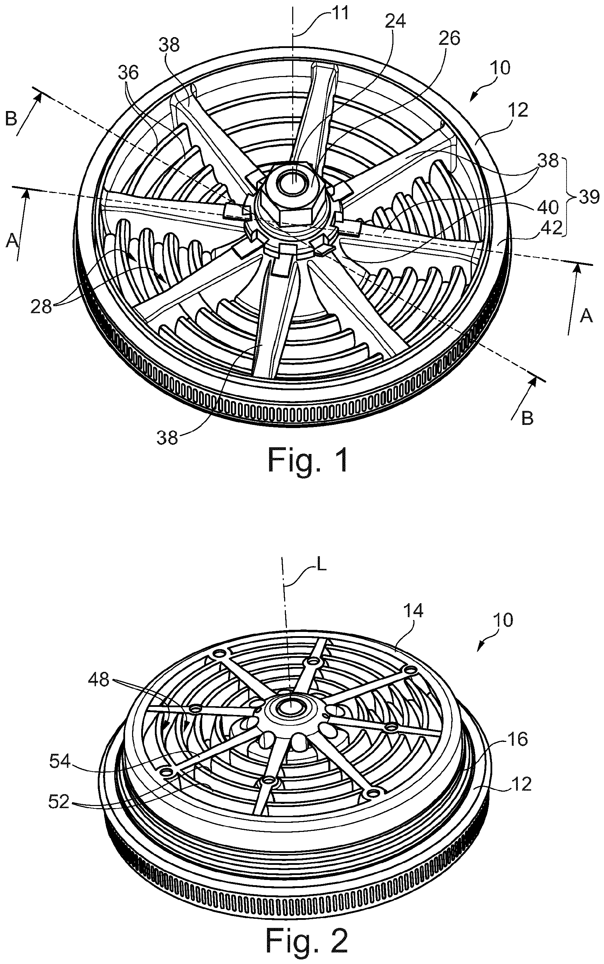

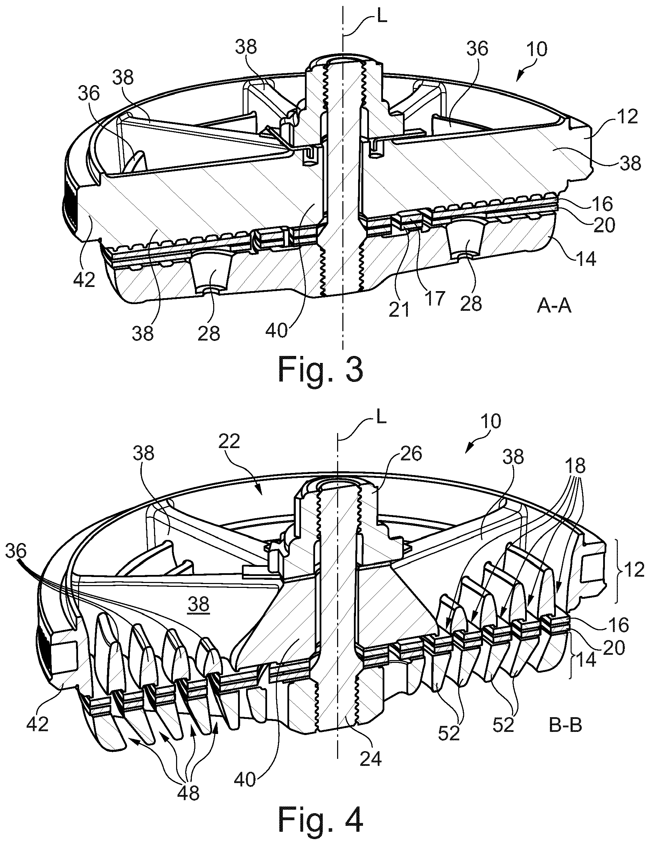

Die Fig. 1 und 2 zeigen perspektivische Ansichten eines erfindungsgemässen Sitzventils 10 und die Fig. 3 und 4 zeigen Schnittdarstellungen des Sitzventils 10 entlang unterschiedlicher Ebenen. So zeigt Fig. 3 eine Schnittdarstellung des Sitzventils 10 von Fig. 1 entlang Ebene A-A und Fig. 4 zeigt eine Schnittdarstellung des Sitzventils von Fig. 1 entlang Ebene B-B.

Das Sitzventil 10 weist eine Längsachse L auf, die in einer längsaxialen Richtung beziehungsweise in einer Höhenrichtung des Sitzventils 10 verläuft.

Wie den Fig. 1 bis 4 entnommen werden kann, weist das Sitzventil 10 einen Ventilsitz 12, einen beabstandet vom Ventilsitz 12 angeordneten Fänger 14 sowie ein zwischen dem Ventilsitz 12 und dem Fänger 14 angeordnetes Dichtelement 16 auf. Das Dichtelement 16 kann zum Öffnen und Schliessen eines im Ventilsitz 12 ausgebildeten Durchlasskanals 18 zwischen dem Ventilsitz 12 und dem Fänger 14 bewegt werden. Insbesondere kann das Dichtelement 16 zum Öffnen eines Durchlasskanals 18 von dem Ventilsitz 12 wegbewegt und zum Schliessen eines Durchlasskanals 18 auf den Ventilsitz 12 zubewegt werden beziehungsweise an diesem zur Anlage kommen. Die Öffnungs- und Schliessbewegungen des Dichtelements 16 erfolgen in längsaxialer Richtung entlang der Längsachse L.

Wie insbesondere den Schnittdarstellungen in den Fig. 3 und 4 zu entnehmen ist, kann zwischen dem Dichtelement 16 und dem Fänger 14 ferner ein Dämpfelement 20 vorgesehen sein. Das Dämpfelement 20 kann eine Öffnungsbewegung des Dichtelements 16 abdämpfen und hierdurch Verschleisserscheinungen verringern. Ebenso ist es möglich, dass das Dichtelement 16 selbst dämpfende Eigenschaften aufweist und somit auf ein gesondertes Dämpfelement verzichtet werden kann.

Wie den Fig. 1 bis 4 weiter zu entnehmen ist, können die Ventilkomponenten des Sitzventils 10 über eine Schraubenverbindung 22 miteinander verschraubt sein. So kann ein Gewindebolzen 24 in den Fänger 14 eingeschraubt sein und andererseits durch das Dämpfelement 20, das Dichtelement 16 sowie den Ventilsitz 12 durchragen. Der Gewindebolzen 24 erstreckt sich somit insbesondere in längsaxialer Richtung entlang der Längsachse L. Auf der Seite des Ventilsitzes 12 kann wiederum eine Befestigungsmutter 26 auf den Gewindebolzen 24 aufgeschraubt sein. Der erforderliche Abstand zwischen dem Ventilsitz 12 und dem Fänger 14 kann durch den Einsatz von Distanzelementen aufrechterhalten werden.

Erfindungsgemäss ist nun mindestens eine der als Ventilsitz 12, Fänger 14 oder Dichtelement 16 ausgebildeten Ventilkomponenten zumindest abschnittsweise durch additive Fertigung erzeugt. Insbesondere kann die jeweilige Ventilkomponente auch vollständig durch additive Fertigung erzeugt sein. Sofern auch ein Dämpfelement 20 vorgesehen ist, kann auch dieses mittels additiver Fertigung erzeugt sein.

Durch den Einsatz additiver Fertigung, insbesondere durch selektives Laserschmelzen oder selektives Lasersintern, können mit nur geringem Aufwand komplexe geometrische Strukturen erzeugt werden. Die jeweiligen Ventilkomponenten können auf diese Weise sowohl im Hinblick auf günstige strömungsmechanische Eigenschaften als auch im Hinblick auf Stabilitätserfordernisse ausgestaltet werden. Neben dem selektiven Laserschmelzen oder dem selektiven Lasersintern können auch andere additive beziehungsweise generative Fertigungsverfahren für die Herstellung der in Rede stehenden Ventilkomponenten zum Einsatz kommen. Hierzu zählen beispielsweise das selektive Heizsintern, Binder Jetting, Elektronenstrahlschmelzen, Fused Deposition Modeling, Stereolithographie und/oder das 3D-Siebdruckverfahren.

Der Einsatz additiver Fertigungsverfahren kann in vorteilhafter Weise auch mit mechanischen Fertigungsverfahren, insbesondere spanenden Fertigungsverfahren kombiniert werden. Auf diese Weise kann in nur einer Werkstückaufspannung sowohl eine additive Fertigung als auch eine spanabhebende Fertigung vorgenommen werden. Hierdurch lassen sich Ventilkomponenten mit besonders hoher Präzision erzeugen.

Das Dichtelement 16 kann in einer dem Ventilsitz 12 zugewandten Orientierung vorgespannt sein. Hierfür können hier nicht näher dargestellte Federelemente vorgesehen werden. Derartige Federelemente können insbesondere in Ausnehmungen 28 des Fängers 14 angeordnet sein, wie beispielsweise der Fig. 3 zu entnehmen ist.

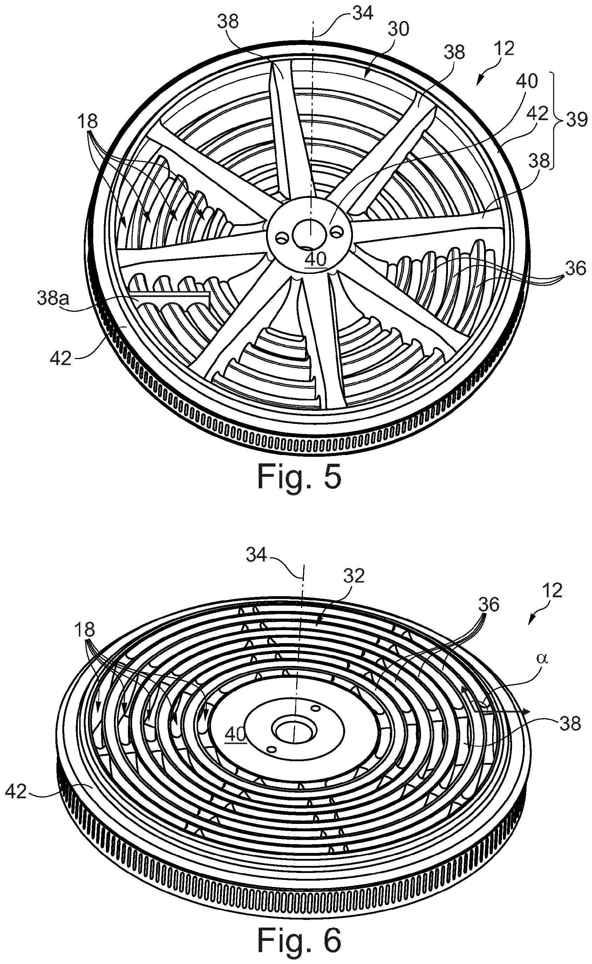

Die Fig. 5 und 6 zeigen perspektivische Ansichten des Ventilsitzes 12. Dabei ist in Fig. 5 der Ventilsitz 12 von einer aussenliegenden Einströmseite 30 und in Fig. 6 von einer innenliegenden Ausströmseite 32 zu sehen. Bei der Einströmseite 30 handelt es sich folglich um eine Aussenseite, welche im zusammengebauten Zustand des Sitzventils 10 aussen liegt. Bei der Ausströmseite 32 handelt sich um eine Innenseite, die im zusammengebauten Zustand des Sitzventils 10 im Ventilinneren liegt.

Den Fig. 5 und 6 kann entnommen werden, dass der Ventilsitz 12 mit einer Mehrzahl von Durchlasskanälen 18 ausgestattet ist. Insbesondere können fünf Durchlasskanäle 18 vorgesehen sein. Die Durchlasskanäle 18 können dabei konzentrisch zueinander und in einer radialen Richtung des Ventilsitzes 12 verteilt angeordnet sein. Die radiale Richtung erstreckt sich dabei quer zu einer längsaxialen Richtung entlang einer Längsachse 34 des Ventilsitzes 12. Die Längsachse 34 des Ventilsitzes 12 stimmt überein mit der Längsachse L des zusammengebauten Sitzventils 10.

In dem Ausführungsbeispiel gemäss den Fig. 5 und 6 sind insgesamt fünf Durchlasskanäle, konzentrisch zueinander angeordnet, vorgesehen. Es ist jedoch auch denkbar, eine andere Anzahl von Durchlasskanälen vorzusehen, beispielsweise mehr als fünf, insbesondere bis zu zehn oder mehr als zehn in radialer Richtung verteilt angeordneter Durchlasskanäle 18.

Den Fig. 5 und 6 kann ferner entnommen werden, dass die Durchlasskanäle 18 jeweils durch benachbart angeordnete Durchlasskanalbegrenzungsabschnitte 36 begrenzt werden. Die Durchlasskanalbegrenzungsabschnitte 36 verlaufen insbesondere in einer Umlaufrichtung um die Längsachse 34 herum. Gemäss den Fig. 5 und 6 können die Durchlasskanalbegrenzungsabschnitte 36 insbesondere kreisförmig verlaufen, sodass auch die Durchlasskanäle 18 kreisförmig um die Längsachse 34 herum verlaufen.

Es kann sich, wie in Fig. 5 dargestellt, zudem als vorteilhaft erweisen, zusätzliche Teilstegabschnitte 38a vorzusehen, welche sich in radialer Richtung nicht entlang der gesamten Breite zwischen Randabschnitt 42 und Mittelabschnitt 40 erstrecken, sondern nur über eine Teilbreite. Fig. 5 zeigt beispielhaft nur einen einzigen Teilstegabschnitt 38a. Vorzugsweise sind solche Teilstegabschnitte 38a gegenseitig regelmässig beabstandet in Umfangsrichtung verteilt angeordnet. Vorteilhafterweise sind die Teilstegabschnitte 38a mit dem Randabschnitt 42 verbunden und erstrecken sich ausgehend von diesem in radialer Richtung oder in einer Richtung quer zur radialen Richtung. Solche Teilstegabschnitte 38a können zudem auch im Fänger 14 angeordnet sein.

Der Ventilsitz 12 kann ferner eine Mehrzahl von Stegabschnitten 38 aufweisen. Die Stegabschnitte können die Durchlasskanalbegrenzungsabschnitte 36 unter einem Winkel α kreuzen und somit eine Stütz- oder Tragstruktur 39 für die Durchlasskanalbegrenzungsabschnitte 36 bilden. Dabei können die Stegabschnitte 38 ausgehend von einem Mittelabschnitt 40 des Ventilsitzes radial nach aussen zu einem Randabschnitt 42 verlaufen. Der Randabschnitt 42 kann einen Aussenumfang des Ventilsitzes 12 bilden. Die Stegabschnitte 38 und die Durchlasskanalbegrenzungsabschnitte 36 kreuzen sich wie dargestellt unter einem Winkel α von 90°. Die Stegabschnitte 38 könnten jedoch auch quer bezüglich der Durchlasskanalbegrenzungsabschnitte 36 und dies somit unter einem Winkel α im Bereich von beispielsweise 30° und 150° kreuzen. Vorteilhafterweise bilden der Mittelabschnitt 40, die Stegabschnitte 38 und der Randabschnitt 42 zusammen eine stabile Tragstruktur für die Durchlasskanalbegrenzungsabschnitte 36.

Die Stegabschnitte 38 können insbesondere als Speichen beziehungsweise speichenförmig ausgebildet sein. Dabei können die Stegabschnitte 38 die Durchlasskanäle 18 in einer Umlaufrichtung abschnittsweise unterbrechen.

Ein Durchlasskanal 18 kann somit mehrere in Umlaufrichtung angeordnete Kanalabschnitte aufweisen, welche durch die Stegabschnitte 38 unterteilt sind. Aufgrund der lediglich abschnittsweisen Unterteilung der Durchlasskanäle 18 durch die Stegabschnitte 38 kann auch in einem durch das Dichtelement 16 geschlossenen Zustand des jeweiligen Durchlasskanals 18 zwischen den einzelnen Kanalabschnitten eine Fluidkommunikation bestehen. Hierzu können die Stegabschnitte 38 auf einer dem Dichtelement 16 zugewandten Ausströmseite in längsaxialer Richtung entlang der Längsachse 34 gegenüber den Durchlasskanalbegrenzungsabschnitten 36 zurückstehen. Somit bilden die Durchlasskanalbegrenzungsabschnitte 36 Auflageflächen für das Dichtelement aus, wohingegen die Stegabschnitte 38 frei von derartigen Auflageflächen sind. Das Dichtelement 16 kann somit nicht in unmittelbaren Kontakt mit den Stegabschnitten 38 gelangen.

Der Fig. 5 kann ferner entnommen werden, dass die Stegabschnitte 38 auf einer dem Dichtelement 16 abgewandten Einströmseite des Ventilsitzes 12 gegenüber den Durchlasskanalbegrenzungsabschnitten 36 in längsaxialer Richtung vorstehen. Auf der Einströmseite 30 des Ventilsitzes 12 erstrecken sich die Stegabschnitte 38 also weiter in einer längsaxialen Richtung entlang der Längsachse 34 als die Durchlasskanalbegrenzungsabschnitte 36. Die Stegabschnitte 38 bilden somit eine besonders vorteilhafte Stützfunktionalität beziehungsweise eine Stützstruktur 39 für die Durchlasskanalbegrenzungsabschnitte 36. Die Stützstruktur 39 umfasst vorteilhafterweise alle Stegabschnitte 38 sowie den Mittelabschnitt 40 und den Randabschnitt 42.

Die Stegabschnitte 38 können in längsaxialer Richtung entlang der Längsachse 34 eine insgesamt grössere Erstreckung aufweisen als die Durchlasskanalbegrenzungsabschnitte 36. Ferner können die Durchlasskanalbegrenzungsabschnitte 36 in längsaxialer Richtung entlang der Längsachse 34 unterschiedlich dimensioniert sein. Weiter innenliegend angeordnete Durchlasskanalbegrenzungsabschnitte 36, also näher an dem Mittelabschnitt 40 liegende Durchlasskanalbegrenzungsabschnitte 36, können in längsaxialer Richtung entlang der Längsachse 34 kürzer ausgebildet sein als weiter aussenliegend angeordnete Durchlasskanalbegrenzungsabschnitte 36, also näher an dem Randabschnitt 42 liegende Durchlasskanalbegrenzungsabschnitte 36. Die längsaxiale Dimensionierung der Durchlasskanalbegrenzungsabschnitte 36 kann ausgehend von dem Mittelabschnitt 40 bis zum Randabschnitt 42 auch schrittweise zunehmen.

Wie den Fig. 5 und 6 sowie auch der Schnittdarstellung in Fig. 4 entnommen werden kann, weisen die Durchlasskanäle 18 eine strömungsmechanisch angepasste Form auf. Hierzu können die Oberflächen der Durchlasskanalbegrenzungsabschnitte, welche die jeweiligen Durchlasskanäle 18 begrenzen, einen in längsaxialer Richtung entlang der Längsachse 34 sich ändernden Formverlauf aufweisen. Die jeweiligen Oberflächen können beispielsweise in längsaxialer Richtung gekrümmt oder als Freiformflächen ausgebildet sein.

In Fig. 4 ist zu sehen, dass sich die Querschnittsform eines Durchlasskanalbegrenzungsabschnitts 36 hin zur Einströmseite 30 beziehungsweise in einer von dem Dichtelement 16 abgewandten Orientierung verjüngt. Zudem können die der Einströmseite 30 zugewandten Oberflächen beziehungsweise Abschlusskanten abgerundet sein, sodass für einströmendes Fluid eine nur geringe Gefahr von Verwirbelungen besteht. Eine entsprechende strömungsmechanisch angepasste Formgebung kann auch für die Stegabschnitte 38 vorgesehen sein. Auch die Stegabschnitte 38 definieren zumindest abschnittsweise die Durchlasskanäle 18. Zudem wird auch ausserhalb der Durchlasskanäle 18, nämlich in einem auf der Einströmseite 30 des Ventilsitzes 12 gegenüber den Durchlasskanalbegrenzungsabschnitten 36 vorstehenden Bereich der Stegabschnitte 38 Fluid an den Stegabschnitten 38 vorbeigeleitet. Auch die gegenüber den Durchlasskanalbegrenzungsabschnitten 36 vorstehenden Oberflächenabschnitte der Stegabschnitte 38 können somit gerundet beziehungsweise gekrümmt oder als Freiformflächen ausgebildet sein.

Eine vorstehend beschriebene Formgebung wird in besonders vorteilhafter Weise durch die additive Fertigung begünstigt beziehungsweise vereinfacht. Zudem kann die Anzahl jeweils erforderlicher oder gewünschter Durchlasskanäle ohne nennenswerten Mehraufwand in der Fertigung erhöht werden, insbesondere ohne dass sich hierdurch die Bearbeitungszeiten - etwa durch zusätzliche zeitaufwendige Zerspanungsvorgänge - erhöht wird.

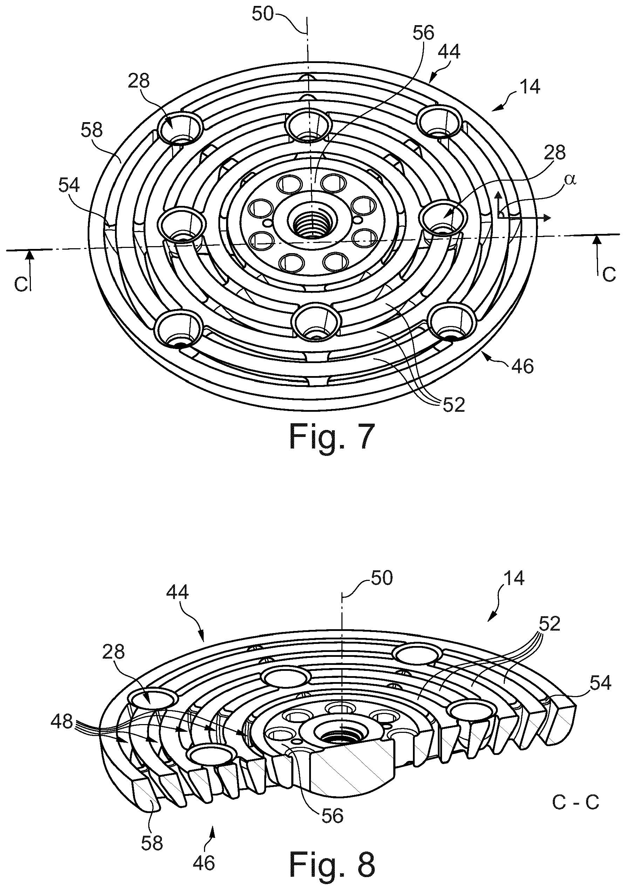

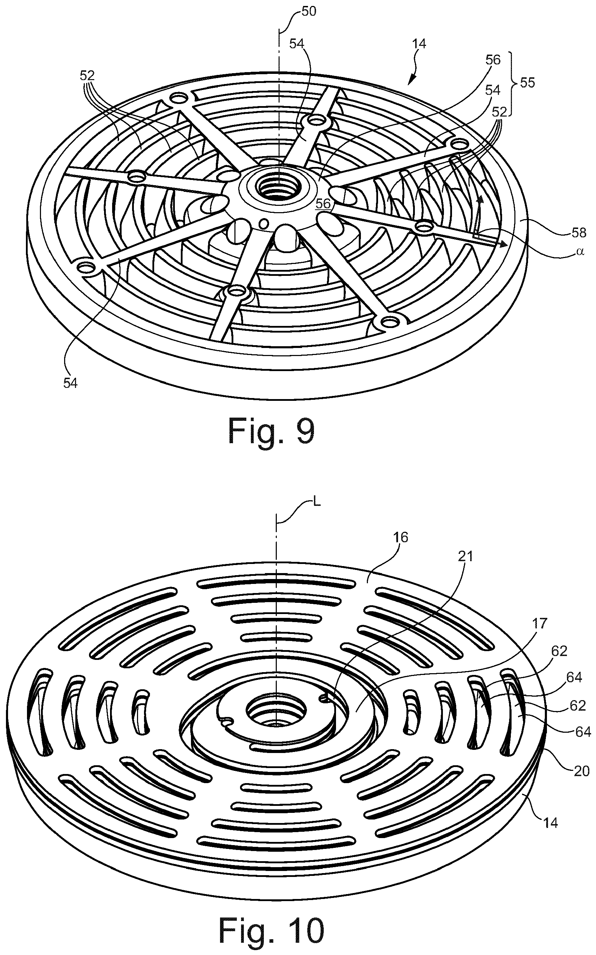

Die Fig. 7, 8 und 9 zeigen perspektivische Darstellungen eines Fängers 14, wobei die Fig. 8 eine Schnittdarstellung entlang der Ebene C-C in Fig. 7 zeigt. Dabei ist in der Fig. 7 die innenliegende Einströmseite 44 gezeigt, welche im zusammengebauten Zustand des Sitzventils 10 dem Dichtelement 16 beziehungsweise dem Dämpfelement 20 zugewandt ist. Die der Einströmseite 44 gegenüberliegende Seite des Fängers 14, wie in Fig. 9 gezeigt, ist eine im zusammengebauten Zustand des Sitzventils 10 aussenliegende Ausströmseite 46.

Der Fänger 14 weist eine Mehrzahl von Durchlasskanälen 48 auf, insbesondere fünf konzentrisch zueinander angeordneter Durchlasskanäle 48. Auch beim Fänger 14 kann eine andere Anzahl von Durchlasskanälen 48 vorgesehen sein, beispielsweise mehr als fünf insbesondere bis zu zehn oder mehr als zehn Durchlasskanäle.

Die Durchlasskanäle 48 sind in einer radialen Richtung zueinander verteilt angeordnet. Alle Stegabschnitte 54 können in radiale Richtung entweder senkrecht oder unter einem Winkel zur längsaxialen Richtung der Längsachse 50 des Fängers 14 verlaufen. Die Längsachse 50 stimmt im zusammengebauten Zustand des Sitzventils 10 mit der Längsachse L beziehungsweise mit der Längsachse 34 des Ventilsitzes 12 zusammen. Die Stegabschnitte 54 bilden eine Stützstruktur 55 aus, wobei diese vorteilhafterweise alle Stegabschnitte 54 sowie den Mittelabschnitt 56 und den Randabschnitt 58 umfasst.

Die Durchlasskanäle 48 können durch benachbart angeordnete Durchlasskanalbegrenzungsabschnitte 52 begrenzt sein. Die Durchlasskanalbegrenzungsabschnitte 52 können dementsprechend in einer Umlaufrichtung um die Längsachse 50 herum verlaufen. Insbesondere können die Durchlasskanalbegrenzungsabschnitte 52 eine kreisrunde Form bilden.

Der Fänger 14 kann ferner eine Mehrzahl von Stegabschnitten 54 aufweisen, welche unter einem Winkel α zur Umlaufrichtung, insbesondere in radialer Richtung verlaufen. Die Stegabschnitte 54 können dabei von einem Mittelabschnitt 56 bis zu einem Randabschnitt 58 in radialer Richtung verlaufen und dabei die Durchlasskanalbegrenzungsabschnitte 52 kreuzen. Die Stegabschnitte 54 verlaufen unter einem Winkel α bezüglich der Durchlasskanalbegrenzungsabschnitte 52, im dargestellten Beispiel unter 90°. Hierdurch können die Stegabschnitte 54, vorzugsweise gemeinsam mit den Mittelabschnitt 56 und dem Randabschnitt 58, wiederum eine Tragstruktur für die Durchlasskanalbegrenzungsabschnitte 52 bilden.

An den Durchlasskanalbegrenzungsabschnitten 52 können Auflageflächen 60 für das Dämpfelement 20 ausgebildet sein. Sofern kein Dämpfelement vorgesehen ist, können die Auflageflächen 16 zur Auflage des Dichtelements 16 ausgebildet sein. Die Aufnahmen 28 für die Fehlerelemente können in vorteilhafter Weise im Bereich eines Stegabschnitts 54 ausgebildet sein, sodass für die hier nicht gezeigten Federelemente eine ausreichend stabile Stützstruktur vorgesehen ist. Die Stegabschnitte 54 können frei von Auflageflächen für das Dämpfelement 20 beziehungsweise das Dichtelement 16 sein. Hierzu können die Stegabschnitte 54 auf der Einströmseite 44 in längsaxialer Richtung entlang der Längsachse 50 gegenüber den Durchlasskanalbegrenzungsabschnitten 52 zurückstehen.

Die Durchlasskanäle 48 können auch im Falle des Fängers 14 strömungsmechanisch angepasst sein. Hierzu können die Oberflächen der Durchlasskanalbegrenzungsabschnitte 52, welche die Durchlasskanäle 48 begrenzen, einen sich in längsaxialer Richtung entlang der Längsachse 50 ändernden Formverlauf haben, beispielsweise Krümmungen, Neigungen und/oder als Freiformflächen ausgebildete Geometrien. Ebenso können entsprechende Oberflächenformen an den Stegabschnitten 54 vorgesehen sein.

In besonders bevorzugter Weise können die Durchlasskanäle 48 ein durchströmendes Fluid in Richtung der Längsachse 50 leiten. Hierzu kann ein Querschnitt eines Durchlasskanals, wie in Fig. 4 oder 8 zu sehen ist, relativ zur Längsachse 50 des Fängers 14 geneigt und/oder gekrümmt sein. Eine solche Neigung beziehungsweise Krümmung - im Längsschnitt des jeweiligen Durchlasskanals 48 gesehen - kann ein solches Zuleiten in Richtung der Längsachse 50 bewirken.

Die Fig. 10 zeigt eine Ansicht des Dichtelements 16 mit darunterliegendem Dämpfelement 20 sowie unter dem Dämpfelement 20 angeordnetem Fänger 14. Das Dichtelement 16 ist über einen Federabschnitt 17 und das Dämpfelement 20 über einen Federabschnitt 21 gehalten. Es ist zu erkennen, dass das Dichtelement 16 mit Durchbrechungen 62 versehen ist, welche in Umlaufrichtung verlaufen. Durch diese Durchbrechungen 62 kann ein aus dem Ventilsitz 12 herausströmendes Fluid hindurchgeleitet werden. Hierzu kann auch das Dämpfelement 20 mit Durchbrechungen 64 ausgestattet sein, die im Wesentlichen mit den Durchbrechungen 62 des Dichtelements fluchten. Die Durchbrechungen 62 sowie 64 fluchten auch im Wesentlichen mit den Durchlasskanälen 48 des Fängers 14.

Die Fig. 1 bis 10 betreffen eine Ausführungsform eines Sitzventils mit kreisrundem Aussenumfang beziehungsweise mit Durchlasskanalbegrenzungsabschnitten 36 und 52, die kreisrund um eine Längsachse L des Sitzventils 10 beziehungsweise um Längsachsen 34 oder 50 der jeweiligen Ventilkomponente verlaufen.

Ebenso ist es denkbar, dass das Sitzventil 10 eine ovale oder elliptische oder auch eine rechteckige Aussenumfangsform aufweist. Dabei können die Durchlasskanalbegrenzungsabschnitte an derartige Aussenumfangsformen angepasst sein beziehungsweise der jeweiligen Aussenumfangsform entsprechen. Im Falle von ovalen oder elliptischen Aussenumfangsformen kann das Sitzventil 10 also quer zur längsaxialen Richtung entlang der Längsachse L eine Längen- und eine Breitendimension aufweisen, wobei die Längendimension grösser ist als die jeweilige Breitendimension. Die von einem Fluid durchströmbare Fläche durch die Durchlasskanäle 18 kann auf diese Weise vergrössert werden. Ein solches Sitzventil kann im Einsatz in einem Kolbenkompressor für den oberen Totpunkt einen geringeren Strömungswiderstand aufweisen.

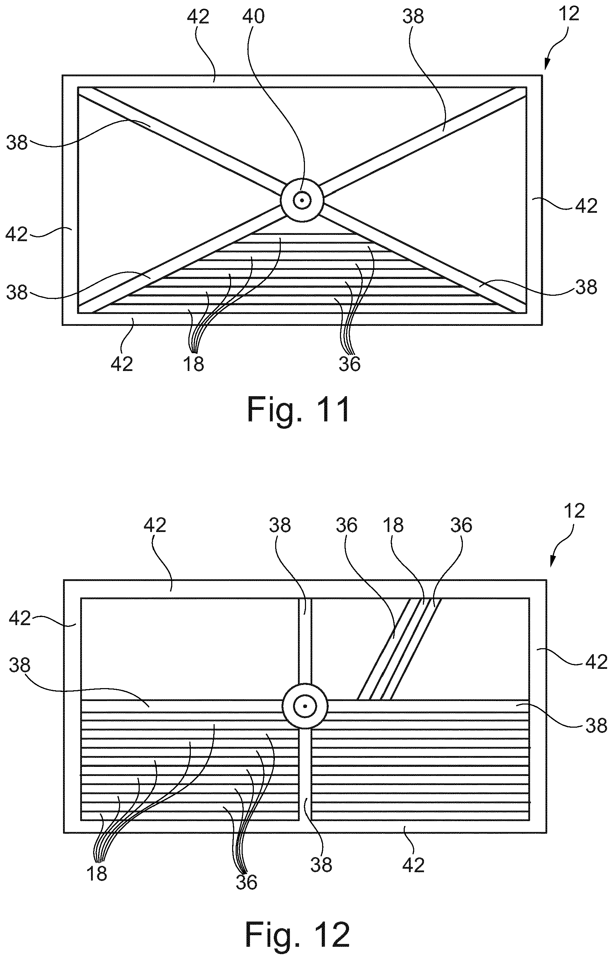

Die Figuren 11 und 12 zeigen zwei weitere Ausführungsbeispiele eines Ventilsitzes 12 mit einer Stützstruktur umfassend einen Mittelabschnitt 40, einen Randabschnitt 42 sowie Stegabschnitte 38. Die Stützstruktur trägt Durchlasskanalbegrenzungsabschnitte 36, zwischen welchen sich jeweils ein Durchlasskanal 18 befindet. In den Figuren 11 und 12 sind nur im unteren Feld die Durchlasskanalbegrenzungsabschnitte 36 dargestellt, wobei natürlich auch die übrigen, leer dargestellten Felder solche Durchlasskanalbegrenzungsabschnitte 36 und zugehörige Durchlasskanäle 18 aufweisen. In Figur 12 ist im oberen rechten Feld beispielhaft noch eine weitere Variante zur Anordnung von Durchlasskanalbegrenzungsabschnitten 36 dargestellt, welche einen Durchlasskanal 18 ausbildet, wobei vorzugsweise die gesamte Fläche des oberen rechten Feldes Durchlasskanalbegrenzungsabschnitte 36 aufweisen könnte. Auch ein Fänger 14 könnte derart ausgestaltet sein. Der erfindungsgemässe Ventilsitz 12 und/oder Fänger 14 umfasst vorteilhafterweise eine Stützstruktur sowie eine Mehrzahl von Durchlasskanalbegrenzungsabschnitten 36. Diese Unterteilung in Stützstruktur und Durchlasskanalbegrenzungsabschnitte 36 erlaubt es die Durchlasskanalbegrenzungsabschnitte 36 in einer Vielzahl von Verlaufsformen bezüglich der Stützstruktur anzuordnen, sodass die in den Figuren 11 und 12 dargestellte Ausführungsformen nur Beispiele aus einer Vielzahl möglicher Ausführungsformen darstellen.

Durch den Einsatz additiver Fertigung für zumindest eine der Ventilkomponenten des Sitzventils 10 können sich sowohl Vorteile hinsichtlich der Strömungsmechanik ergeben, ohne dass der Fertigungsaufwand nennenswert erhöht wird. Gleichzeitig kann eine ausreichende mechanische Stabilität der jeweiligen Ventilkomponenten sichergestellt werden. Zudem ermöglicht der Einsatz additiver Fertigung Materialeinsparungen, da ein Zerspanen der jeweiligen Komponente vermieden oder auf ein geringeres Mass reduziert werden kann.

Ein Verfahren zum Herstellen von Ventilkomponenten des Sitzventils 10, wobei die Ventilkomponenten zumindest einen Ventilsitz 12 und/oder einen Fänger 14 umfassen, erfolgt derart, dass durch additive Fertigung eine Stützstruktur 39,55 umfassend eine Mehrzahl von Stegabschnitten 38,54 erzeugt wird, indem durch additive Fertigung zudem eine Mehrzahl von mit dem Stegabschnitten 38,54 verbundene Durchlasskanalbegrenzungsabschnitte 36,52 erzeugt werden, wobei die Durchlasskanalbegrenzungsabschnitte 36,52 derart angeordnet werden, wobei zwischen den Durchlasskanalbegrenzungsabschnitten 36,52 Ventilsitzdurchlasskanäle 18 und/oder Fängerdurchlasskanäle 48 ausgebildet sind.

## Patentansprüche

1. Sitzventil (10), insbesondere Plattenventil, mit einer Längsachse (L), mit einem Ventilsitz (12) aufweisend eine Mehrzahl von Ventilsitzdurchlasskanälen (18), mit einem in Richtung der Längsachse (L) beabstandet zum Ventilsitz (12) angeordneten Fänger (14) und mit einem zwischen dem Ventilsitz (12) und dem Fänger (14) beweglich angeordneten Dichtelement (16) zum Öffnen und Schliessen der Ventilsitzdurchlasskanäle (18), **dadurch gekennzeichnet, dass** mindestens eine der als Ventilsitz (12), Fänger (14) oder Dichtelement (16) ausgebildeten Ventilkomponenten zumindest abschnittsweise durch additive Fertigung erzeugt ist, insbesondere durch selektives Laserschmelzen oder selektives Lasersintern (SLS) oder Elektronenstrahlschmelzen.

2. Sitzventil (10) nach Anspruch 1, **dadurch gekennzeichnet, dass** mindestens eine der als Ventilsitz (12) oder Fänger (14) ausgebildeten Ventilkomponenten eine Mehrzahl von Durchlasskanalbegrenzungsabschnitten (36, 52) sowie eine Mehrzahl von Stegabschnitten (38, 54) aufweist, wobei die Durchlasskanalbegrenzungsabschnitte (36, 52) Ventilsitzdurchlasskanälen (18) und/oder Fängerdurchlasskanäle (48) ausbilden, wobei die Durchlasskanalbegrenzungsabschnitte (36, 52) und die Stegabschnitte (38,54) gegenseitig jeweils unter einem Winkel (α) verlaufen, wobei zumindest einer der Durchlasskanalbegrenzungsabschnitte (36, 52) in Richtung der Längsachse (L) der jeweiligen Ventilkomponente unterschiedlich dimensioniert ist als einer der Stegabschnitte (38, 54) der jeweiligen Ventilkomponente.

3. Sitzventil (10) nach Anspruch 2, **dadurch gekennzeichnet, dass** die Stegabschnitte (38, 54) Teil einer Stützstruktur (39, 55) ausbilden, dass die Durchlasskanalbegrenzungsabschnitte (36,52) von der Stützstruktur (39, 55) gehalten sind, und dass die Stegabschnitte (38,54) zusammen mit den Durchlasskanalbegrenzungsabschnitten (36,52) einstückig ausgestaltet sind.

4. Sitzventil (10) nach Anspruch 2 oder 3, **dadurch gekennzeichnet, dass** jeder Stegabschnitt (38,54) entlang dessen gesamten Länge geradlinig verläuft.

5. Sitzventil (10) nach Anspruch 4, **dadurch gekennzeichnet, dass** der Ventilsitz (12) einen Mittelabschnitt (40) sowie einen Randabschnitt (42) aufweist und/oder dass der Fänger (14) einen Mittelabschnitt (56) sowie einen Randabschnitt (58) aufweist, und dass die Stegabschnitte (38,54) speichenförmig zwischen Mittelabschnitt (40, 56) und Randabschnitt (42, 58) verlaufen.

6. Sitzventil (10) nach einem der Ansprüche 2 bis 5, **dadurch gekennzeichnet, dass** an den Durchlasskanalbegrenzungsabschnitten (36, 52) Auflageflächen für die Auflage des Dichtelements (16) oder eines Dämpfelements (20) ausgebildet sind.

7. Sitzventil (10) nach einem der Ansprüche 2 bis 6, **dadurch gekennzeichnet, dass** die Stegabschnitte (38, 54) frei von Auflageflächen für das Dichtelement (16) oder das Dämpfelement (20) sind.

8. Sitzventil (10) nach zumindest einem der Ansprüche 2 bis 7, **dadurch gekennzeichnet, dass** zumindest einer der Stegabschnitte (38, 54) auf einer dem Dichtelement (16) oder dem Dämpfelement (20) abgewandten Seite in Richtung der Längsachse (L) der jeweiligen Ventilkomponente gegenüber einem der Durchlasskanalbegrenzungsabschnitte (36, 52) der jeweiligen Ventilkomponente vorsteht.

9. Sitzventil (10) nach Anspruch 2 bis 8, **dadurch gekennzeichnet, dass** zumindest einer der Stegabschnitte (38, 54) auf einer dem Dichtelement (16) oder dem Dämpfelement (20) zugewandten Seite in Richtung der Längsachse (L) der jeweiligen Ventilkomponente gegenüber einem der Durchlasskanalbegrenzungsabschnitte (36, 52) der jeweiligen Ventilkomponente zurücksteht.

10. Sitzventil (10) nach zumindest einem der Ansprüche 2 bis 9, **dadurch gekennzeichnet, dass** alle Stegabschnitte (38, 54) der jeweiligen Ventilkomponente in Richtung der Längsachse (L) eine grössere Dimensionierung aufweist als die Durchlasskanalbegrenzungsabschnitte (36, 52) der jeweiligen Ventilkomponente.

11. Sitzventil (10) nach zumindest einem der Ansprüche 2 bis 10, **dadurch gekennzeichnet, dass** die Ventilsitzdurchlasskanäle (18) und/oder die Fängerdurchlasskanäle (48) in Richtung der Längsachse (L) eine strömungsmechanisch ausgerichtete Formgebung aufweist und/oder zwischen zwei benachbarten Durchlasskanalbegrenzungsabschnitten (36, 52) mit strömungsmechanisch ausgerichteter Formgebung ausgebildet sind.

12. Sitzventil (10) nach Anspruch 11, **dadurch gekennzeichnet, dass** die Fängerdurchlasskanäle (48) relativ zur Längsachse (L) des Fängers (14) einen geneigten und/oder gekrümmten Längsschnitt aufweisen.

13. Sitzventil (10) nach einem der Anspruch 11 oder 12, **dadurch gekennzeichnet, dass** zumindest einige der Ventilsitzdurchlasskanäle (18) und/oder der Fängerdurchlasskanäle (48) durch Oberflächen benachbarter Durchlasskanalbegrenzungsabschnitte (36, 52) definiert ist, die in Richtung der Längsachse (L) der jeweiligen Ventilkomponente einen sich zumindest abschnittsweise ändernden Formverlauf aufweisen

14. Sitzventil (10) nach einem der Ansprüche 2 bis 13, **dadurch gekennzeichnet, dass** zumindest einer der Durchlasskanalbegrenzungsabschnitte (36, 52) eine Längsschnittform aufweist, die sich in Richtung der Längsachse (L) der jeweiligen Ventilkomponente in einer von dem Dichtelement (16) oder von dem Dämpfelement (20) abgewandten Orientierung verjüngt.

15. Ventilkomponente, insbesondere Ventilsitz (12) oder Ventilfänger (14) für ein Sitzventil (10) nach einem der vorstehenden Ansprüche, mit wenigstens einem Durchlasskanal (18, 48), der durch zumindest einen mittels additiver Fertigung erzeugten Durchlasskanalbegrenzungsabschnitt (36, 54) begrenzt ist.

16. Verfahren zum Herstellen von Ventilkomponenten eines Sitzventils (10), insbesondere eines Plattenventils, wobei die Ventilkomponenten zumindest einen Ventilsitz (12) und/oder einen Fänger (14) umfassen, indem durch additive Fertigung eine Stützstruktur (39,55) umfassend eine Mehrzahl von Stegabschnitten (38,54) erzeugt wird, indem durch additive Fertigung zudem eine Mehrzahl von mit dem Stegabschnitten (38,54) verbundene Durchlasskanalbegrenzungsabschnitte (36,52) erzeugt werden, wobei die Durchlasskanalbegrenzungsabschnitte (36,52) derart angeordnet werden, wobei zwischen den Durchlasskanalbegrenzungsabschnitten (36,52) Ventilsitzdurchlasskanäle (18) und/oder Fängerdurchlasskanäle (48) ausgebildet sind.
